Europäisches Patentamt

European Patent Office

Office européen des brevets

(19)

(11) Publication number:

0 327 015

A2

## (12) EUROPEAN PATENT APPLICATION

(21) Application number: 89101620.6

(51) Int. Cl.⁴ G01G .19/08

(22) Date of filing: 31.01.89

(30) Priority: 01.02.88 IT 8360288

(43) Date of publication of application:
09.08.89 Bulletin 89/32

(84) Designated Contracting States:
AT BE CH DE ES FR GB GR IT LI LU NL SE

(71) Applicant: Treno, Walter
Via U. Foscolo 3
I-21040 Jerago con Orago (Varese)(IT)

Applicant: Caruggi, Pier Carlo
Via U. Foscolo 3
I-21040 Jerago con Orago (Varese)(IT)

(72) Inventor: Treno, Walter
Via U. Foscolo 3
I-21040 Jerago con Orago (Varese)(IT)
Inventor: Caruggi, Pier Carlo
Via U. Foscolo 3
I-21040 Jerago con Orago (Varese)(IT)

(74) Representative: Sassi, Romano
UFFICIO BREVETTI VARESINO Viale Belforte
89
I-21100 Varese(IT)

(54) Suspension system, placeable at more levels on transport vehicles, adapted to render commutable the load and or the tare or parts thereof between load bearing members and weighting members.

(57) The suspension system for commercial vehicles, is placeable at more levels of same vehicles and is adapted to render commutable the load and or the tare or parts thereof between load bearing members and weighting members. The levels at which the system members comprised thereby are at least: a) that between frame and body, in order that the latter engages the weighting members; b) that between the leaf spring connections and the leaf springs; c) that between between the axle of vehicle and the leaf springs; d) that between each axle and road plane, after that the vehicle tires were disengaged therefrom. The weighting means, chosen for suspension and/or commutation, are load cells and the signals, emitted therefrom, are grouped and/or synthesized, sending them on a generic or specific terminal.

FIG.1

# SUSPENSION SYSTEM, PLACEABLE AT MORE LEVELS ON TRANSPORT VEHICLES, ADAPTED TO RENDER COMMUTABLE THE LOAD AND OR THE TARE OR PARTS THEREOF BETWEEN LOAD BEARING MEMBERS AND WEIGHTING MEMBERS

The present invention relates to a suspension system, placeable at more levels on transport vehicles, adapted to render commutable the load and or the tare or parts thereof between load bearing members and weighting members.

At the present state of the art, for knowing the weight of vehicles and of their loads, there is only the solution to drive the vehicle above a balance. Generally it is a weigh machine and it is available only in certain condition of space and time. Whereas quite often it is useful, in any condition, to know the total or particular weight of the goods loaded on the vehicle. Lacking of weigh machine, renders difficult the survey with participation of controller and controlled. This quite often result in a conflict. Furthermore there are professions, based on a transport means, for which the use of a balance is essential. Even nowadays the only itinerant balance, is the weigh bridge, with which may be weighed goods whose weight do not exceeds its capacity and of course not the whole vehicle. Whereas, for weighing substantially complete loads, stationary weighing machine were used; which not always were in accessible places and/or had the due characteristic of size and capacity. Even in the best possible situation, two travels to and from the weighing machine were necessary: one for weighing the tare and the other for weighing the gross weight. Between the two times, might happen to affect the accuracy of survey and when a high precision was necessary, it was not suited.

Even the policemen surveying the load transportation must be provided with a flat weigh machine, in the form of platform, adapted to receive the tires of each axle of the vehicle. The use of this means, in addition to its presence and availability, required some operations including even vehicle driving which engaged controllers and controlled for a relatively long time in addition to the necessary room to do this. The result obtained were subject to calculation and difficult operation and they were often objected and caused discussions and even injustice.

The invention, as claimed, is intended to remedy these drawbacks. The inventors, with ingenious perception have conceived a suspension system, based on weighting members, surveying, at several levels and in particular at body level, at frame and/or axle levels and at road plane level the vehicle loading condition. The opportunity to operate the system at a specific level depends obviously on the structural conditions of vehicle, and on its use destination. Regarding the ways of application of suspension system, it must be distinguished among a vehicle which is completely new a vehicle which is new only in the upper section, over chassis, and existent and/or used vehicles.

About the former, those completely new, any of four planes may be chosen; about the making provided above the chassis, made by body works, the two superior planes may be chosen; whereas for existent and/or used vehicles, it is more convenient a suspension system at road level, which is simpler and adapted to be combined with several vehicles with different possibility of use even to be established by the same. The axles plane may be provided with the means in accordance with the invention provided that some arrangements are made on chassis structure and/or on same body.

The four levels adapted to receive in accordance with the present invention, the members of the system are:

1) that between frame and body, in order that the latter weighs on same weighting members.

2) that between le leaf spring connections and le leaf springs;

3) that between each axle of vehicle and the leaf springs;

4) that between each axle and the road plane, after lifting of vehicle disengaging its tires from the road plane.

Of course from the level at which the weighting means are placed depend also the nature of the weight and the quantity of load weighted, i.e. that are all the weighing thereon. Thus in practice, the upper planes of vehicle provide, substantially, a number of balances; while, the weighting means, at road level, provide, in optimal manner a task, that synthesizes that comprehensive performed by bridle balances for truck load weighing.

In accordance with a preferred embodiment of the present invention, the weighting means, chosen for the suspension and/or commutation, are load cells and signals, emitted therefrom, are grouped and/or synthesized, sending them to a generic or specific terminal, which in compliance with a program, may provide the needed information in due form. Such signals are distributed, through sockets collectors and the like, in several places of the vehicle, even outside therefrom, to receive also the terminals carried by controllers who may thus be sure that their own instrument are entrustable.

Weighting members including a load cell are comprised by a normal connecting member. Thus the loading and safety condition of the vehicle remain unchanged,despite of presence of weighting members thereon.

When the suspension system is applied, between each axle and the road plane, the weighting member is placed to provide a loadable section of a member having substantially the nature of a jack or similar hoisting device. Such jacks may comprise a mechanic or hydraulic embodiment.

In the mechanic embodiment jacks may comprise independent and moveable units, duly provided with coupling members connectable with coupling complementary members fixedly placed at each axle site Such removability of jacks may be useful, for reasons of encumbrance, and for antitheft reasons. On the other side the same jacks provide a service which is substitutive of conventional jacks to lift the vehicle e.g. for servicing the wheels and the tires.

In the hydraulic embodiment of jacks, they will be connected to the hydraulic system, already comprised in the vehicle and they will be retractable and controlled by remote actuators and by an electrovalve, particularly providing an automatic weighing cycle.

Load cells and in general weighting members provide indications of high accuracy. However, should the loaded jacks, not be perfectly upright, due to sloping of road plane or the like, the indication of weighting members would be false. Thus a correction of the indication is provided by the terminal, in function of the indications of an instrument which monitors the shifting from verticality of jack.

In order to explain in a better manner the features of the present invention, reference is made to the accompanying drawings which show one possible embodiment thereof in schematic manner and merely by way of explanation.

Figure 1 is a perspective, schematic view, of a three axle track, wherein at each of four levels previsti is applied at least a significant section, of the suspension system. Per simplicity and clearness of drawings the middle levels are shown, each on a single axle, i.e. one level on the forward axle and the other level on the rear axle, including two axes. Since the system levels and not the vehicle are to be evidenced the latter is. substantially shown in contour phantom lines.

Figure 2 is a detailed perspective view, showing in an enlarged scale the weighting members, comprising a load cell, included in the top level, i.e. that between body and frame, only limited sections thereof are shown.

Figure 3 is a detailed, perspective, view, showing, in an enlarged scale weighting members comprising a load cell, regarding the second upper level, i.e. that at the connection point of one of leaf springs.

Figure 4 is a detailed, perspective, view of one of weighting members, in the form of load cell, regarding the third superior level, i.e.that between one of leaf springs and the axle.

Figure 5 is detailed side view, showing partially in elevation and partially in cross section one of devices in the form of mechanical jack, including the weighting members, in the form of load cells, regarding the fourth bottom level, i.e. that between the axle and the road plane. The same jack is is shown in operation, i.e.expanded.

Figure 6 is a front view of the jack of figure 5.

Figure 7 is substantially a repetition of Figure 5 but with respect to an hydraulic and automatic device. Of same retracted jack is shown, in phantom lines a rest position.

Figure 8 is a schematic plane view showing, in a substantially symbolic fashion, the electric-hydraulic system, connecting the totality of weighting members.

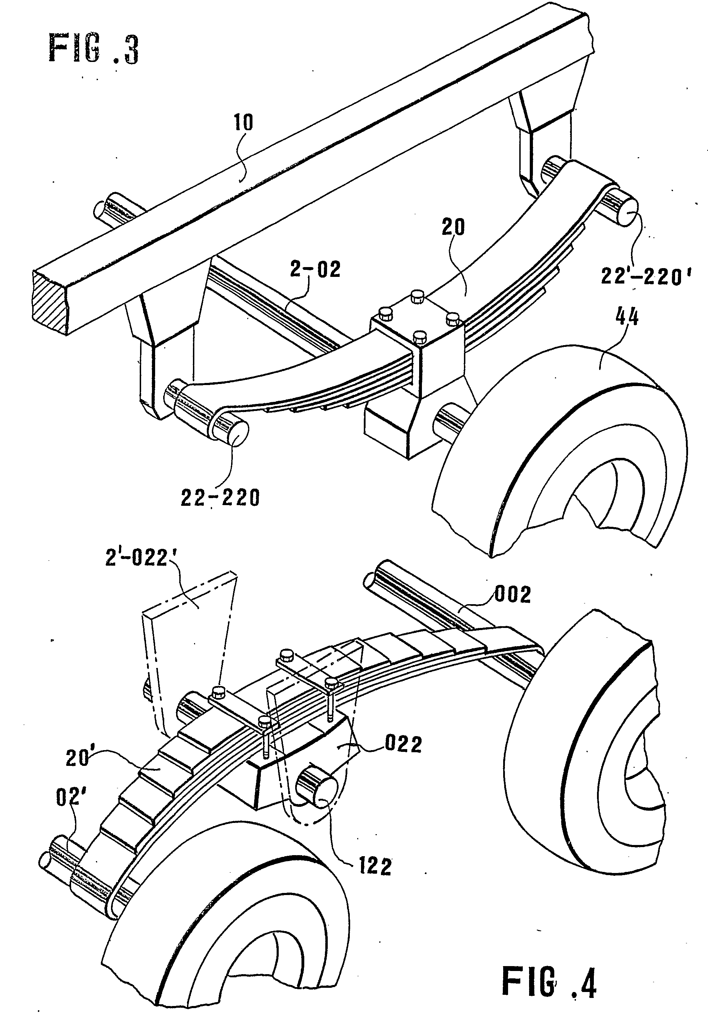

Referring now to the figures of the drawings, a truck 0 comprises, conventionally, a chassis 1, including frame 10, cab 11, and forward and rear axles 2 and 2'; as well as body 3. The body 3, which is generally provided by body makers, is connected to the frame 10 of chassis 1 by a plurality of supports 13, from one side solidally fastened to the body 3 and from the other side solidally fastened to the frame 10. The bottom of frame 10, is connected to the axles 2, 2', by forward leaf springs 20 and rear leaf springs 20'. Forward leaf springs 20, are from one end solidal with one end of axle 2 and from the other end to the rod like ends 22, 22',.solidal to frame 10. The axle, in case that it is like the forward one 2 and therefore is simple, corresponds to the axes 02 of the wheel, in this case (figure 3) the forward one. Whereas, when the rear one 2' is double comprising the axis 02', 002 it is provided with a single connection 022 between the leaf spring 20' and the bearing bracket 022' (figure 4).

In accordance with the present invention:

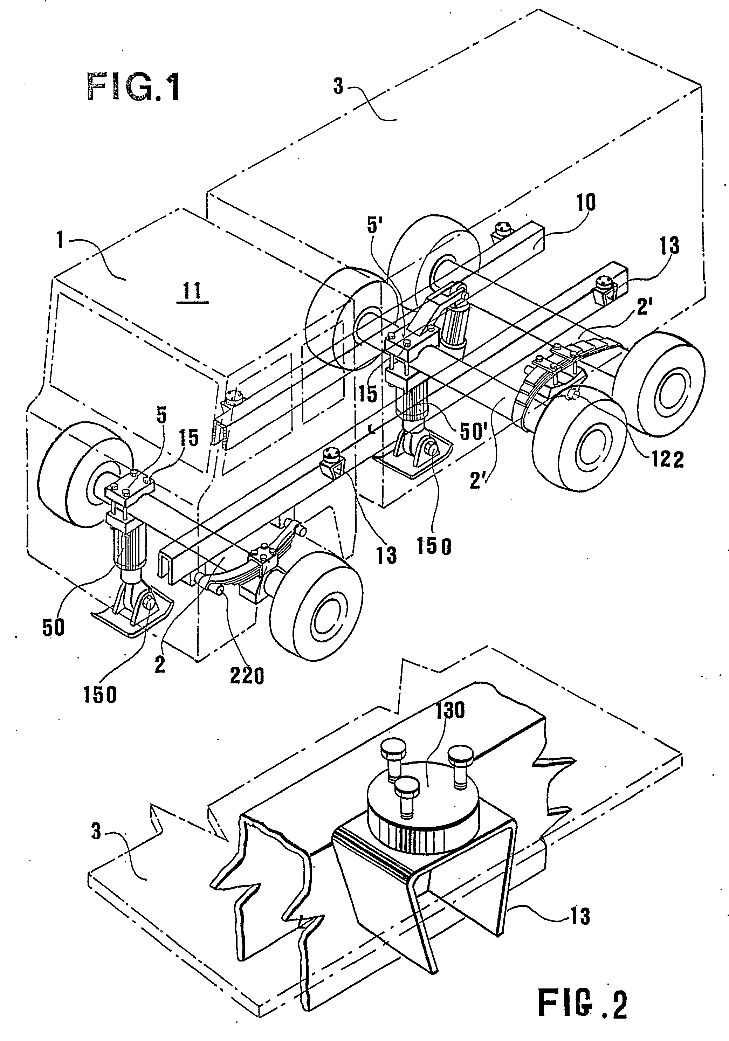

a) in supports 13 is comprised a weighting member 130, figure 2, to be described thereafter, with particular reference to this figure, in order to provide the first top level;

b) in connections 22, 22' of the leaf springs 20, is comprised a weighting member 220, figure 3, to be described thereafter with particular reference to this figure, in order to provide the second superior level;

c) in supports 022 of connection to the leaf springs 20' of rear axle 2' is included a weighting member 122, figure 4, to be described thereafter with particular reference with this figure, in order to provide the third superior level;

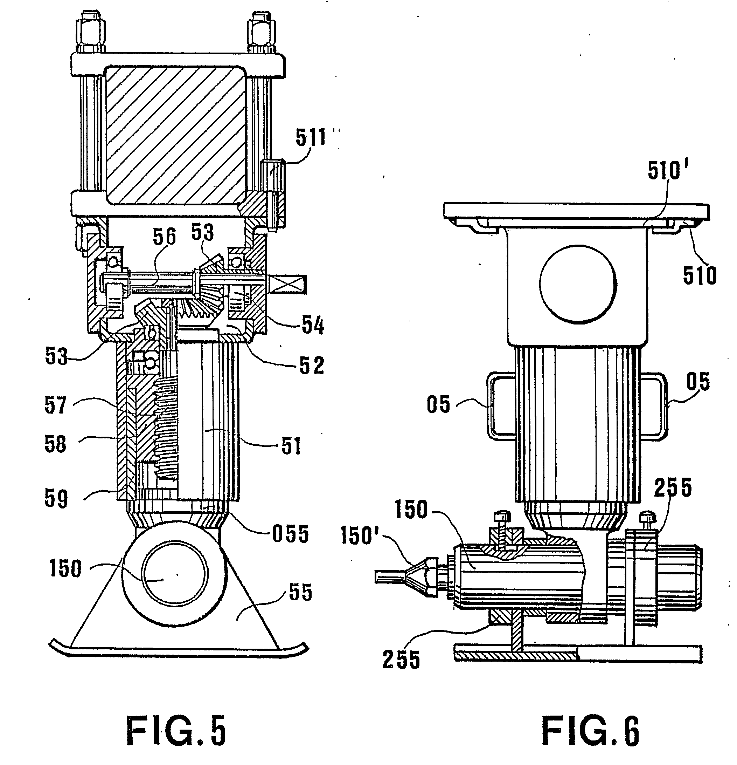

d) each axle 2, 2' is provided with a pair of connections 5, 5' which may be fixedly or moveably coupled with a jack 50, 50' including in at least one bearing section thereof, a weighting member 150, figure 5, 6 and 7, to be described thereafter with reference to each of these figures, in order to provide a bottom level, i.e. that between the same axles and the road plane.

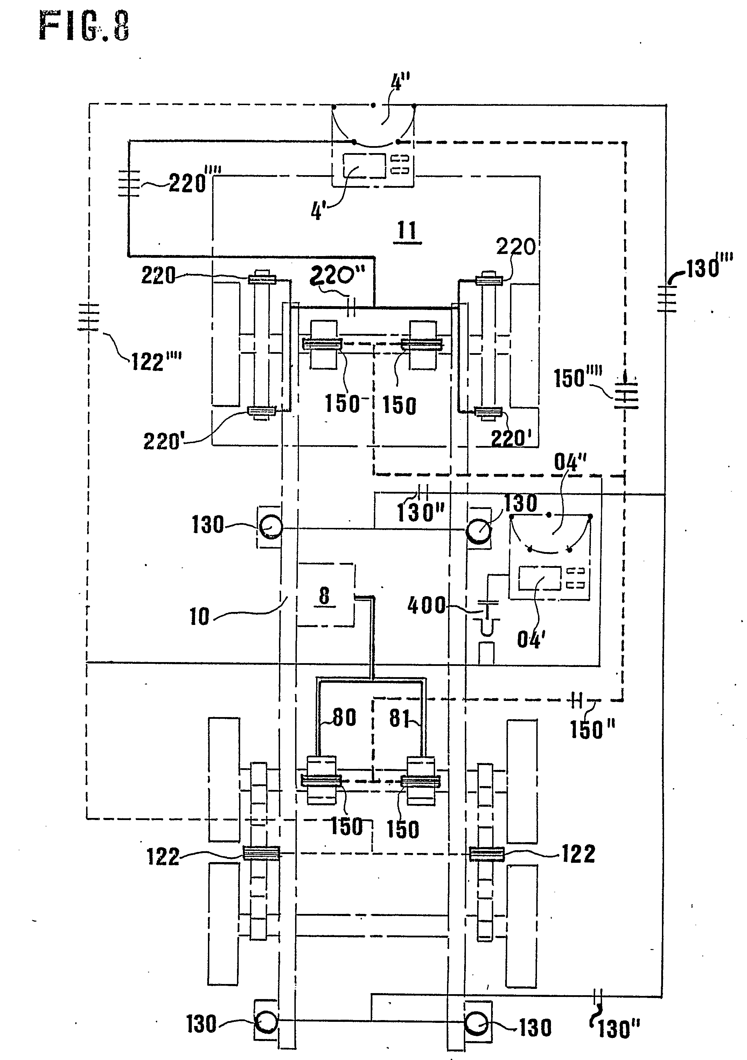

Between the weighting members 130, 220, 122, 150, of any kind (those shown in the drawings are load cells) provide a signal, which may be elaborated by a computer 4 or the like, in order that they may be elaborated in accordance with the user need or public or private rules. Moreover the signals emitted by weighting members 130, 220, 122, 150, and those emitted by computer 4 are, preferably, distributed, inside the track 0 or outside from it, localizing in strategical places sockets and/or connectors 100 available to be inspected by controllers and controlled, each of which may use an access and monitoring instrument (not shown). E.g. the computer 4 may be placed in the cab 11, while on frame 10 may be placed some sockets 100 for monitoring of data to be distributed and possibly direct and remote control. These weighting members 130, 122, 220 and 150, and the same computer 4 need a reduced power and voltage which may be supplied by the same vehicle by access to battery 40 (figure 8). The three superior levels are permanently in a position to provide the data to be used for weighting loads weighing thereon, in order that they may be controlled, even frequently, even in function of other parameters, such as the speed of vehicle and the like. Thus, with the same, recorded graphs may be plotted, even to provide meaningful "black box", in case of accident and the like.

Whereas, at the first inferior level the weighting members 150, included in jacks 50, 50', do not permit the use of same in a permanent way; it is possible only when vehicle 0, is on rest, since the jacks 50, 50', are to be placed with their base 55, 55' on the road plane and the wheel 44, affecting at least an axle 2 and/or 2', are to be disengaged from the same road plane.

The jacks 50, may comprise independent movable units, duly provided with coupling members 510 connectable with coupling complementary members 510', providing a connection 5 fixedly placed at each axle site fastened with screw 15. Such removability of jacks 50 may be useful, for reasons of encumbrance, and for antitheft reasons. On the other side the same jacks 50, 50' provide a service which is substitutive of conventional jacks to lift the vehicle 0, e.g. for servicing the wheels and the tires.

In the hydraulic embodiment of the jacks 50', they are connected to the hydraulic system 8, already included in the vehicle and they will be retractable and controlled by remote actuators a distanza and by an electrovalve system, particularly running an automatic weighting cycle. To obviate false indication, in case that jacks 50, 50', when loaded, are not perfectly vertical, due to sloping of road plane or the like, an arrangement is provided by terminal 4, to arrange the output thereof in answer to the result given by an instrument monitoring the upright shifting.

Now the details of mechanic jack 50 shown in figures 5 and 6, though they are conventional, will be described. It comprises a body 51, substantially cylindrical solidal with a gear box 52 whose gears 53 are mounted on bearing 54 and shafts 56. The gear box 52 is provided by coupling members 510' connectable to the parallel guides 510. Between the guides 510 and the coupling members 510' there is also a latch 511 adapted to engage and disengage the jack 50 for its possible removal and occasional application which may be provided easily through the handles 05. The gears 53, drive a screw 57 engaging a lead nut 58 which is solidal with tubular piston 59 which at the lower end is provided with a coupling 055 which is coupled to the weighting member 150 comprising a load cell mounted on a support 55 in the form of bracket from which projects two 255. The load cell 150 emits through an output terminal 150' signals which are proportional to the load weighing thereon. It is self explaining that driving an handle, not shown, the outer polygonal end of rod 56 in clockwise or anticlockwise direction respectively to disengage or engage the tires from the road plane in order that the weight is completely burdened on the weighting members 150.

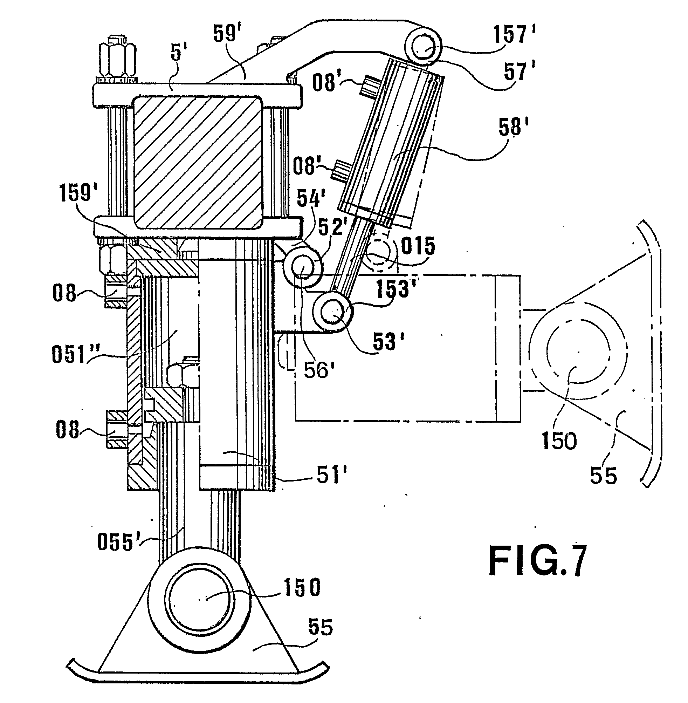

Now the details of hydraulic jack 50' shown in figure 7, corresponding to mechanic jack of figures 5 and 6, will be described. It too comprises a body 51', substantially cylindrical solidal with a pair of hinges 52', 53' to parallel and coplanar axes. They are respectively connected to a fixed hinge 54', through a rod 56' and at the bottom end 153' of rod 015 of piston-cylinder unit 58', whose other end 57' is hinged by a rod 157' to the projecting end of arm 59' solidal with connection 5' as the bottom flange 159'.

It is self explaining as providing pressure through inlets 08 into the space 051' of cylinder 51' its piston 055' expands and the vehicle is lifted disengaging the tires of its wheels from the road in order that the load weight completely on the weighting members 150 (figure 6). In fact the bottom section and the inherent members correspond exactly even in term of references to Figure 6 i.e. mechanic jack. The determinant difference between the mechanic jack of figures 5 and 6 and that hydraulic of Figure 7 is the way by which either are operated in engaging and disengaging position. The mechanic jack, as said, is removable. Whereas the hydraulic jack position is stationary and its operation from resting condition (shown in phantom lines in figure 7) to effective condition, shown in figure 7 with continuous lines is provided by a servocontrol (not shown) from driving place feeding pressure to either inlet connections 08' of cylinder 58'.

Figure 8 and its following description are an useful summary. In Figure 8 four planes of cells are shown. The cells are 130; 220, 220'; 122; 150. All the wires connecting the same, have the same numbers as the respective cells, but with double inverted commas and possibly with quadruple inverted commas for the manifold connection of the same reference. Whereas, the same connections do not differ for for number but for nature of the lines. In particular, the lines representing the known sections or members are in phantom lines, the load cells are shown in elevation; whereas the connections regarding the load cells 130 i.e. that of the first level are referenced 130" and are shown by continuous thin lines; that of load cells 220, 220' i.e.of second level are referenced by 220" and shown with continuous thick lines; that of load cells 122 i.e.of second level are referenced by 122" and are shown by dashed thin lines; that of load cells 150, i.e.of second level are referenced by 150" and are shown by dashed thin lines Moreover, hydraulic connections are shown shadowed in elevation, and referenced by digit 8 and/or figures initiating with such figure. All the electric wires are connected to terminal 4, which is stationary, and placed in cab 11; it is computerized and provided with display 4'. To symbolize at hardware level an important function which could be also softwarized, commutator 4" was included, providing to control the signals of various members The same signals, available inside the cab 11, are available outside, at socket 400, to be used by an external terminal 04 whose members are referenced with the same numbers of terminal 4 preceded by 0.

## Claims

1. Suspension system per commercial vehicles, characterized in that it is placeable at more levels on transport vehicles, adapted to render commutable the load and or the tare or parts thereof between load bearing members and weighting members.

2. Suspension system, as claimed in claim 1, characterized in that it is provided on weighting members and is capable to provide monitoring, at several levels:

1) that between frame (10) and body (3), in order that the latter engages the same weighting members;
2) that between the leaf spring connections (2', 022') and the leaf springs (20 - 20');
3) that between each axle of vehicle and the leaf springs;
4) that between each axle ed il road plane, after that the vehicle tires were disengaged therefrom..

3. Suspension system for commercial vehicles, as claimed in claims 2 and 3, characterized in that the weighting means, chosen for the suspension and/or commutation, are load cells and the signals, emitted therefrom, are grouped and/or synthesized, sending them on a general or specific terminal.wherein said terminal receiving the signals emitted from weighting members elaborate them possibly in compliance with a program, to provide the due information.

4. Suspension system for commercial vehicles, as claimed in claim 3, characterized in that the signals emitted by weighting members and/or computerized by terminal connected therewith are distributed, through sockets collectors and the like, in several place of the vehicle, even outside thereof, to receive the corresponding means, carried by controllers, who may check the use of correct instrument and the like.

5. Suspension system for commercial vehicles, as claimed in claims from 1 to 4, characterized in that in weighting members including a load cell it is comprised by a means in the shape of a quite normal structural member, i.e. having the same shape size and resistance to the load.

6. Suspension system for commercial vehicles, as claimed in claim 2, characterized in that when it is applied between each axle and road plane, the weighting member is placed in any loaded section of any member, having substantially the nature of a mechanical jack which comprises, an independent, and removable unit, duly provided with coupling members, connectable with complementary joining means placed at each axle.site.

7. Suspension system for commercial vehicles, as claimed in claim 6, characterized in that the jacks are hydraulic and connected to hydraulic system, already included in the vehicles, wherein the hydraulic jacks are retractable and controlled by remote actuators as well as by an electrovalve system, particularly to provide an automatic weighting cycle.

8. Suspension system for commercial vehicles, as claimed in one or more of preceding claims, characterized in that means to be driven by the terminal are provided, to arrange the output thereof in answer to the result given by an instrument monitoring the upright shifting.

9. Suspension system for commercial vehicles, as claimed in claim 2, characterized in that at each support (13) conventionally connecting the body (3) to the frame (10) is provided a weighting member (130), at each connection (22, 22´) of each leaf spring (20), is provided a weighting member (220) and at each support (022) of each connection to leaf springs (20´) of each axle (2´) is provided a weighting member (122).

10. Suspension system for commercial vehicles, as claimed in claim 2, characterized in that each axle (2, 2´) is provided with a pair of connections (5, 5´) to be moveably or fixedly joined to a jack (50, 50´) including in at least one loaded section thereof, a weighting member (150).

# FIG.1

# FIG .2

FIG .3

10

2-02

20

22'-220'

44

22-220

2'-022'

002

20'

022

02'

122

FIG .4

EP 0 327 015 A2

FIG.5

FIG.6

FIG.7

# FIG.8